# EUROPEAN PATENT SPECIFICATION

(11) **EP 3 255 356 B1**
(45) Date of publication and mention of the grant of the patent: **24.04.2019**
(21) Application number: 16173600.4
(22) Date of filing: 08.06.2016
(51) Int. Cl.: F24S 10/90, F24S 60/30, F24S 20/40

(54) **HEATING DEVICE WITH TWO COMBINED HEAT UNIT AND HEATING METHOD**
HEIZVORRICHTUNG MIT ZWEI KOMBINIERTEN WÄRMEEINHEITEN UND HEIZVERFAHREN
DISPOSITIF DE CHAUFFAGE AVEC DEUX UNITÉS THERMIQUES COMBINÉES ET PROCÉDÉ DE CHAUFFAGE

(43) Date of publication of application: 13.12.2017
(73) Proprietor: Vestel Elektronik Sanayi ve Ticaret A.S., 45030 Manisa (TR)
(72) Inventor: Ayran, Çaglar, 45030, Manisa (TR); Özen, Erol, 45030, Manisa (TR)
(74) Representative: Ascherl, Andreas

(56) References cited:
- EP-A1- 1 353 130
- WO-A1-2013/176611
- CN-A- 104 913 543
- CN-U- 203 286 777
- CN-U- 203 323 422
- US-A- 4 267 825

## Description

This invention relates to a heating device according to claim 1 and a method for heating fluids, in particular liquids, like e.g. water, according to claim 10.

### Background of the Invention

Most common techniques to heat water in domestic usage are heat pumps and heat pipes. Heat pumps are more powerful heating elements but heat pipes have advantage of efficiency. This invention use both heat pump and heat pipe at the same time to increasing the efficiency of heat pipes and create an extra heat source when heat pipes could not generate enough heat to satisfy hot water demand.

Heat pipes are passive heating elements generally mounted with a constant slope. Heat pipe condensers are mostly used upside of heat pipe, so that a negative gravity effect occurs.

Conventional techniques use that systems cascaded and mostly use a tank to store heated water with stand by losses. This invention uses both of them but not cascaded, synchronously. Mostly in summer, heat pipes could meet the demands but low sun energy can cause a low heat production, so this synchronous system meets the hot water demand without a hot water tank. System designed as a vacuum heat pipe that contains heat pump condenser mounted inside. So heat pump supports heat pipe, and condenser vibration - which evaluated as an efficiency loss in common usage- helps vaporization inside of the heat pipe.

A solar water heater system composed of retrofitting an existing conventional gas or electric water heater by adding a solar thermal circulating loop is known from the state of the art, wherein a heat pipe vacuum tube solar collector, a thermal circulating pump, a computer control system with temperature sensors and relative three-way connections, valves and pipes are installed on the existing water storage tank. Such a solar water heater system is e.g. disclosed by document US8375934.

Furthermore, document US4343296 discloses a solar heating system for providing heat to a building Said system has a plurality of solar panels for collecting heat. The solar panels have a transparent panel through which the sunlight passes for heating the interior of the panel and the air within that panel. Additionally, the transparent panels include concentrating lenses for heating a heat exchanger disposed within the panel whereby additional heat is provided to heat the air within the solar panel. Heat generated through the solar panel is stored in Zeolite crystals in a heat storage chamber that is utilized to provide heat for the building. The Zeolite crystals function as a sponge-like substance which has the property to store 750,000 BTU per cubic yard for an indefinite time. A heat pump is provided to supplement the solar heat when the temperature in the heat storage chamber is below a comfortable level. During heat pump operation solar warmed air is pumped from the heat storage chamber to the chamber surrounding the heat pump evaporator to raise the evaporator ambient temperature and provide more efficient heat pump operation.

Document US4190199 discloses a heating system incorporating a conventional furnace, heat pump and solar energy subsystem. A control unit thereby coordinates operation of the components. In a solar assist mode, heat stored in the solar energy subsystem is transferred to the outside or evaporator coil of the heat pump to increase the efficiency thereof.

Usage of solar heater in summer time and using heat pump in winter time will solve hot water need in domestic usage. The known systems use cascaded or are equipped with a water tank and thus with standby loss. One of the main advantage of solar heater with heat pipe is that it can be done either without a tank or with a micro-tank, but adding an extra tank for the heat pump system will create standby losses.

Another problem with heat pipe solar heaters is gravity, using against gravity decreases overall efficiency. Because they are completely passive so, there are no mechanical forced circulation and gravity decrease vapor / liquid flow.

Document CN 203286777 U discloses a heating device according to the preamble of claim 1.

### Object of the Invention

It is the object of the present invention to provide an advanced heating device and method for heating a fluid with a high efficiency, wherein the heating device and method should enable low and high hot-water demands.

### Description of the Invention

The before mentioned object is solved by a heating device according to claim 1. The heating device according to the present invention at least comprises a heat pipe unit, wherein the heat pipe unit comprises at least one heat pipe for heating water, and a heat pump unit for heating the water inside the heat pipe, wherein the heat pump unit comprises a fluid conducting means for conducting an energy transferring fluid, wherein the fluid conducting means comprises an evaporation section for evaporating the energy transferring fluid, and wherein the fluid conducting means comprises a condensing section for condensing the evaporated transferring fluid, wherein the condensing section is thermally and mechanically coupled to the lower 75% (length) of one or more heat pipes of the heat pipe unit, for transferring vibrations caused by the heat pump unit to at least one heat pipe for atomizing water inside the heat pipe. Mechanically or thermally coupled does not necessarily means directly coupled it also can be understood as indirectly coupled. That means that the heat and/or vibration can be transferred via a further element, like a supporting structure, from the condensing section to the heat pipe/s.

According to the present invention, the condensing section is mechanically coupled to the lower 75% (length) of one or more heat pipes for transferring vibrations caused by the heat pump unit to at least one heat pipe for atomizing water inside the pipes. This is beneficial since due to the rolled condenser respectively condensing section vibration is controlled and tolerated which is a boost for evaporation inside the heat pipes against the gravity. Vapor/liquid flow decrease caused by gravity can be minimized by this evaporation boost technique.

This solution is beneficial since multiple positive effects occur due to a combination of a heat pipe unit with a heat pump unit. E.g. the heat pump unit always causes vibrations which are used according to the present invention to move the fluid, in particular liquid, in particular water, inside the heat pipe. This results in an increased efficiency of heat pipes by giving a vibration space for condenser section of the heat pump unit and therefore improves gravity performance of the heat pipe unit. Furthermore, no additional water tank is required, since also the heat pump unit heats the water inside the heat pipe. Since the heating can be adapted to the heat demand and/or the weather conditions, the inventive device is very flexible, thus the inventive system is optimized for winter and summer usage. Furthermore, the heat pipe performance is peak at boiling temperature of inside liquid. So in lower temperatures there are performance losses, so the heat pump unit can actively support the heat pipe unit to ensure better respectively maximum performance.

Advantageous embodiments may be configured according to any claim and/or the following specification parts.

The heat pipe unit comprises according to a preferred embodiment of the present invention multiple heat pipes and the condensing section extends along a plurality of said heat pipes.

This embodiment is beneficial since the heat provided by the heat pump unit can be transferred in a fast and sufficient manner to the heat pipes or the heat pipe unit. Additionally the condensing section preferably is rolled respectively has a meander like shape in the region of the heat pipe unit. This feature is beneficial since the condensing section can extend along the length direction of one or multiple heat pipes, thus a large heat transfer region for transferring heat from the heat pump unit to the heat pipe unit can provided.

According to a further preferred embodiment of the present invention the heat pipes are arranged on a supporting structure. The supporting structure is preferably configured in such a manner that one or multiple heat pipes are aligned with respect to the environment in an angle between 1° and 89°, in particular in an angle between 5° and 60°. The heat pipes or multiple of the heat pipes are preferably connected to a common fluid, in particular liquid, in particular water, source and to a common water outlet. This embodiment is beneficial since the heat pipes can be arranged in such a manner that the sun rays are heating the fluid inside the heat pipes also if the sun moves from an ideal position to a less ideal position with respect to the orientation of the heat pipes.

The condensing section is preferably coupled to the lower 50%, in particular to the lower 33%, in particular to the lower 20%, in particular to the lower 15%, in particular to the lower 10%, in particular to the lower 5% (length) of a heat pipe.

A surface adjacent the heat pipes, in particular underneath the heat pipes, is according to a further preferred embodiment of the present invention at least partially darkened, in particular colored black, for reducing the reflection of sunlight, wherein the surface is preferably coated with a dark colored coating. A black coating is preferably understood as a coating that has a RGB code of (0, 0, 0), respectively that reflects less than 75% of the visible light, in particular that reflects less than 50% of the visible light, in particular that reflects less than 40% of the visible light, in particular that reflects less than 30% of the visible light, in particular that reflects less than 20% of the visible light, in particular that reflects less than 15% of the visible light, in particular that reflects less than 10% of the visible light, in particular that reflects less than 5% of the visible light. Visible light is hereby preferably understood as light having a wave length of 380nm to 780 nm.

The supporting structure and at least some of the heat pipes are according to a further preferred embodiment of the present invention covered with a layer of material being at least transparent for multiple wave length of visible light. Preferably an intermediate space between the layer and the supporting structure is evacuated. This embodiment is beneficial, since vacuum encapsulation prevents heat exchange from outside of the heat pipes and heat pump condensing section. Vacuum encapsulation respectively evacuation preferably describes a pressure reduced state, in particular the pressure inside the intermediate space is preferably less than 1bar or less than 0,8bar or less than 0,6bar or less than 0,5bar.

The heat pump unit further comprises according to a preferred embodiment of the present invention a vaporization section for vaporizing previously condensed fluid, wherein the conducting means forms a circulatory connecting the vaporization section with the condensing section, wherein a compression means for compressing the vaporized fluid is arranged between the vaporization section and the condensing section.

According to a further preferred embodiment of the present invention an adjustment means for stepwise or stepless adjusting of the fluid flow inside the condensing section is provided.

This embodiment is beneficial since the vibration caused due to the condensing can be modified respectively adjusted. Preferably, a sensor means is additionally provided for detecting vibrations of the condensing section, wherein the sensor means is coupled with the adjustment means for setting up a fluid flow causing predefined vibrations of the condensing section. This embodiment is beneficial since the vibrations can be detected in real time and respective modifications can be carried out. It is further conceivable that the vibrations are modified or adjusted in dependency of the temperature of the fluid and/or with respect to the degree of the filling level of the fluid inside one or multiple heat pipes and/or the shape of the heat pipe/s.

It is also conceivable that a claim is directed to a heating device at least comprising a heat pipe unit, wherein the heat pipe unit comprises at least one heat pipe for heating water, and additional heat source, in particular an electric heat source like a resistance heating or a heat pump, wherein the additional heat source is at least thermally coupled with the at least one heat pipe of the heat pipe unit. Alternatively, it is possible that a claim is directed to a heating device at least comprising a heat pipe unit, wherein the heat pipe unit comprises at least one heat pipe for heating water, and a vibration means for causing vibrations of at least one heat pipe, wherein the vibration means is at least mechanically coupled with the at least one heat pipe of the heat pipe unit.

The before mentioned object is also solved by a method for heating water. The inventive method preferably comprises at least the steps providing a heating device according to any of the preceding claims, determining the maximum output or throughput of water heated to a predefined temperature of the heat pipe unit, determining if the maximum output or throughput is above or below the actual demand, in case the determined maximum output or throughput is less than the actual demand the heat pump unit is activated.

Further benefits, goals and features of the present invention will be described by the following specification of the attached figures, in which exemplarily components of the invention are illustrated. Components of the devices and methods according to the inventions, which match at least essentially with respect to their function can be marked with the same reference sign, wherein such components do not have to be marked or described in all figures.

In the following the invention is just exemplarily described with respect to the attached figures.

### Brief Description of the Drawings

- Fig. 1: shows a schematic illustration of a heating device according to the present invention,
- Fig. 2: shows a more detailed illustration of the heating device according to the present invention, and
- Fig. 3: shows a further detailed illustration of a coupling section between the heat pipe unit and the heat pump unit of the inventive heating device.

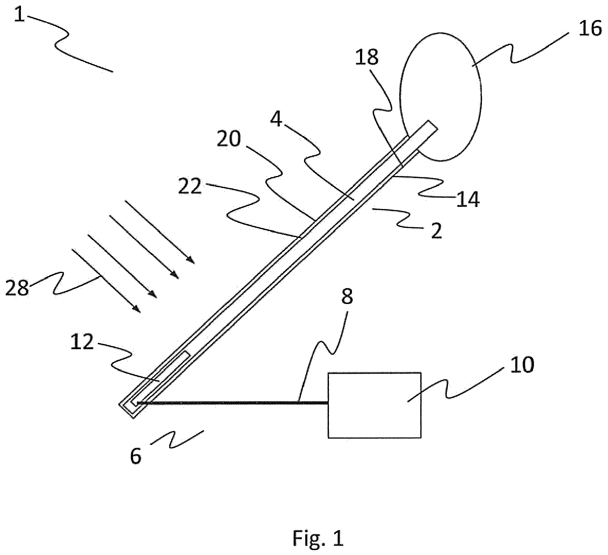

Fig. 1 shows a heating device 1 according to the present invention. This heating device 1 comprises a heat pipe unit 2 and a second heat source, wherein the second heat source is coupled with the heat pipe unit 2 to heat a fluid inside the heat pipe unit 2. The second heat source is preferably a heat pump unit 6. The heat pump unit 6 at least comprises a conducting means 8 for conducting an energy transferring fluid form a evaporation section 10 to a condensing section 12 and vice versa. The condensing section 12 is preferably arranged in a lower part of the heat pipe unit 2 and coupled to the heat pipe unit 6 in such a manner that heat and/or vibrations are transferable from the heat pump means 6 to the fluid inside the heat pipes 4 of the heat pipe unit 2. Fig. 1 further shows that the heat pipe 4 is arranged on a supporting structure 14. The supporting structure 14 preferably has a dark surface 18 adjacent respectively beneath and/or besides heat pipe 4. The dark respectively darkened surface 18 that reduces the amount of reflected light respectively increases the amount of absorbed light. The heat pipe 4 in particular multiples heat pipes are preferably covered by a transparent material layer 20, in particular a glass like layer. The resulting intermediate space 22 between the supporting structure 14 and the layer 20 is preferably evacuated, respectively air and pressure reduced. Reference number 16 preferably shows a fluid source, in particular a water tank or a water conduit. Instead of a fluid source reference number 16 can represent a water tank that is filled with water heated by heating device 1.

Reference number 28 indicates sunbeams that heats up the fluid inside the heat pipe unit 2.

Thus, the main principle is using heat pipes 4 and a heat pump unit 6 together in a vacuum synchronously with the heat pump condensing section 12 connected to the heat pipes 4 lower side to heat water synchronously and make enough vibration for helping the liquid inside the heat pipes 4 to vaporize. Heat pump condenser vibration is mostly a non-desirable condition but this invention use that disadvantage as an advantage to increase efficiency of heat pipe unit 2. Vacuum encapsulation prevents heat exchange from outside of the heat pipes 4 and heat pump condensing section 12. Thus, the heat pump unit 6 supports heat pipe unit 2 when hot water demand could not satisfied by the heat pipe unit 2 only.

Water is thus introduced into the heat pipe 4 and heated by sun beams 28. The heated water vaporizes and flows to the upper/top side of the heat pipes 4, where an outlet is present. In case the sun beams 28 are not strong enough or the demand of hot water is to high the heat pump unit 6 is switched on and addes further heat to the heat pipe unit 2. Furthermore, vibrations caused by the heat pipe unit 6 are coupled into the heat pipe unit 2 to support vaporization of the water. The vibrations are preferably defined by their power spectral density, in particular in a range of power spectral density (PSD). The power spectral density can be defined by one or more mechanical features, like heat pump compressor rpm and/or further feature/s. Known compressors have 1000rpm to 100000rpm without any redactor respectively reductant in the compressor. Thus, preferably a vibration pattern is set up respectively establishes respectively randomly occurs with vibration pattern between 10Hz to 2kHz with PSD pattern of which has a peak density at compressor rpm.

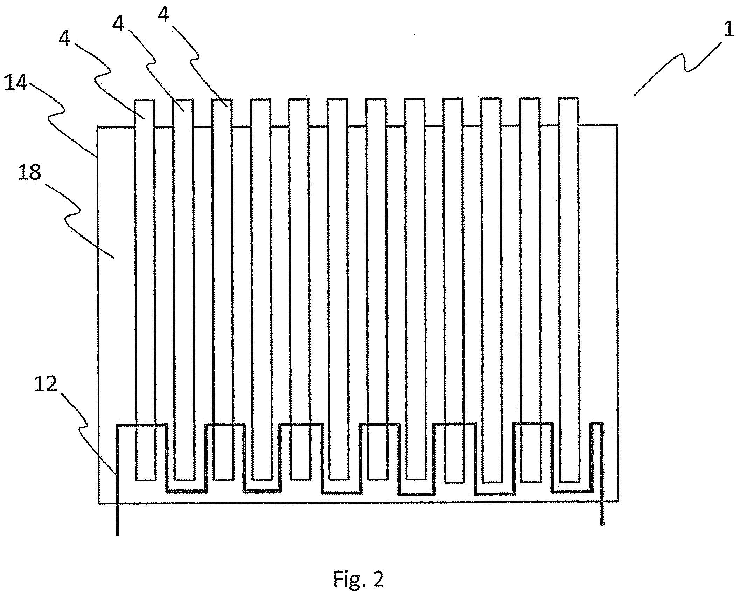

Fig. 2 shows a further schematic sides view of the inventive heat device 1. It is shown that multiple heat pipes 4, in particular more than or up to 5 or more than or up to 10 or more than or up to 15 or more than or up to 25 or more than or up to 50 heat pipes 4 can be provided per heat pipe unit 2. The individual heat pipe 4 is preferably arranged in a distance to the next heat pipe 4. Preferably are all heat pipes 4 spaced apart from each other in a homogenous distance. The heat pipes 4 are arranged on the supporting structure 14, in particular a plate preferably made of metal. The supporting structure 14 is preferably coated respectively covered with a dark element, thus the surface 18 is preferably black.

Furthermore, the condensing section 12 of conducting means 8 preferably extends at least sectionally along the length directions of the individual heat pipes 4. Thus, the condensing section 12 preferably has a meander like shape in the region of the heat pipe unit 2.

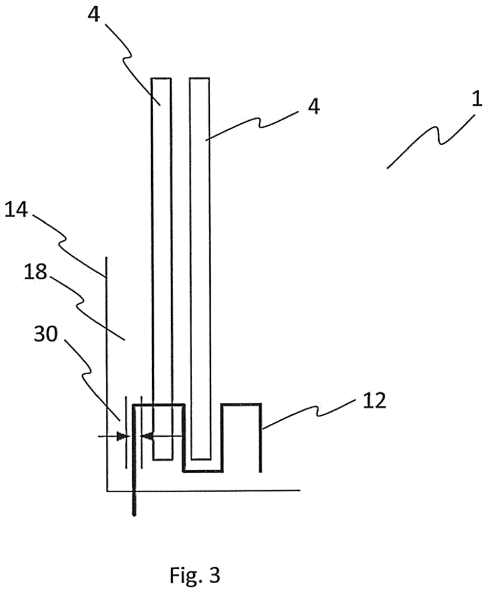

Fig. 3 shows a section of fig. 2 more detailed. It can be seen from that figure that a vibration boundary 30 is preferably provided to enable the transfer of vibrations of the condensing section 12 during the expansion of the fluid therein to the heat pipe unit 6.

### List of reference numbers

- 1: heating device
- 2: heat pipe unit
- 4: heat pipe
- 6: heat pump unit
- 8: conducting means
- 10: evaporation section
- 12: condensing section
- 14: supporting structure
- 16: water source
- 18: surface
- 20: layer of material
- 22: intermediate space
- 28: sunbeams
- 30: vibration boundary

## Claims

1. Heating device (1),
at least comprising
a heat pipe unit (2),
wherein the heat pipe unit (2) comprises at least one heat pipe (4) for heating water,
and
a heat pump unit (6) for heating the water inside the heat pipe (4),
wherein the heat pump unit (6) comprises
a fluid conducting means (8) for conducting an energy transferring fluid,
wherein the fluid conducting means (8) comprises an evaporation section (10) for evaporating the energy transferring fluid,
and
wherein the fluid conducting means (8) comprises a condensing section (12) for condensing the evaporated transferring fluid,
wherein the condensing section (12) is at least thermally coupled with the at least one heat pipe (4) of the heat pipe unit (2) **characterized in that** the condensing section (12) is mechanically coupled to the lower 75% length of one or more heat pipes (4) for transferring vibrations caused by the head pump unit (6) to at least one heat pipe (4) for atomizing water inside the heat pipe (4).

2. Heating device according to claim 1,
**characterized in that**
the heat pipe unit (2) comprises multiple heat pipes (4) and the condensing section (12) extends along a plurality of those heat pipes (4), wherein the condensing section (12) has a meander like shape in the region of the heat pipe unit (2).

3. Heat device according to claim 2,
**characterized in that**
the heat pipes (4) are arranged on a supporting structure (14), wherein the supporting structure (12) is configured in such a manner that the heat pipes (4) are aligned with respect to the environment in an angle between 1° and 89°, wherein the heat pipes (4) are connected to a common water source (16) and to a common water outlet.

4. Heating device according to claim 3,
**characterized in that**
a surface (18) adjacent the heat pipes (4) is at least partially darkened, in particular colored black, for reducing the reflection of sunlight, wherein the surface is preferably coated with a dark colored coating.

5. Heating device according to claim 3 or claim 4,
**characterized in that**
the supporting structure (14) and at least some of the heat pipes (4) are covered with a layer of material (20) at least transparent for a defined spectrum of visible light, wherein an intermediate space (22) between the layer (20) and the supporting structure (14) is evacuated.

6. Heat device according to any of the preceding claims,
**characterized in that**
the conducting means (8) forms a circulatory connecting the vaporization section (10) with the condensing section (12),
wherein a compression means for compressing the vaporized fluid is arranged between the vaporization section (24) and the condensing section (12).

7. Heat device according to claim 3, **characterized in that**
the water source (16) is a tank.

8. Heat device according to any of the preceding claims,
**characterized in that**
an adjustment means for stepwise or stepless adjusting of the fluid flow inside the condensing section (12) is provided.

9. Heat device according to claim 8,
**characterized in that**
a sensor means is provided for detecting vibrations of the condensing section (12), wherein the sensor means is coupled with the adjustment means for setting up a fluid flow causing predefined vibrations of the condensing section (12).

10. Method for heating water, **characterized by** comprising the steps:providing a heating device (1) wherein the heating device comprises at least
a heat pipe unit (2),
wherein the heat pipe unit (2) comprises at least one heat pipe (4) for heating water, and
a heat pump unit (6) for heating the water inside the heat pipe (4),
wherein the heat pump unit (6) comprises
a fluid conducting means (8) for conducting an energy transferring fluid,
wherein the fluid conducting means (8) comprises an evaporation section (10) for evaporating the energy transferring fluid,
and
wherein the fluid conducting means (8) comprises a condensing section (12) for condensing the evaporated transferring fluid,
wherein the condensing section (12) is at least thermally coupled with the at least one heat pipe (4) of the heat pipe unit (2), wherein the condensing section is mechanically coupled to the lower 75% (length) of one or more heat pipes for transferring vibrations caused by the head pump unit to at least one heat pipe for atomizing water inside the heat pipe, determining the maximum output or throughput of water heated to a predefined temperature of the heat pipe unit (2),
determining if the maximum output or throughput is above or below the actual demand,
in case the determined maximum output or throughput is less than the actual demand the heat pump unit (6) is activated.

## Patentansprüche

1. Heizvorrichtung (1),
mindestens aufweisend:
eine Wärmerohreinheit (2),
wobei die Wärmerohreinheit (2) mindestens ein Wärmerohr (4) zum Erwärmen von Wasser aufweist, und
eine Wärmepumpeneinheit (6) zum Erwärmen des Wassers innerhalb des Wärmerohrs (4),
wobei die Wärmepumpeneinheit (6) aufweist:
ein Fluidleitungsmittel (8) zum Leiten eines Energieübertragungsfluids,
wobei das Fluidleitungsmittel (8) einen Verdampfungsabschnitt (10) zum Verdampfen des Energieübertragungsfluids aufweist, und
wobei das Fluidleitungsmittel (8) einen Kondensierungsabschnitt (12) zum Kondensieren des verdampften Übertragungsfluids aufweist,
wobei der Kondensierungsabschnitt (12) mindestens thermisch mit dem mindestens einen Wärmerohr (4) der Wärmerohreinheit (2) gekoppelt ist,
**dadurch gekennzeichnet, dass**
der Kondensierungsabschnitt (12) mechanisch mit den unteren 75% der Länge eines oder mehrerer Wärmerohre (4) gekoppelt ist, um von der Wärmepumpeneinheit (6) verursachte Schwingungen auf mindestens ein Wärmerohr (4) zu übertragen, um Wasser innerhalb des Wärmerohrs (4) zu zerstäuben.

2. Heizvorrichtung gemäß Anspruch 1,
**dadurch gekennzeichnet, dass**
die Wärmerohreinheit (2) mehrere Wärmerohre (4) aufweist und der Kondensierungsabschnitt (12) sich entlang mehrerer dieser Wärmerohre (4) erstreckt, wobei der Kondensierungsabschnitt (12) in dem Bereich der Wärmerohreinheit (2) eine mäanderartige Form hat.

3. Heizvorrichtung gemäß Anspruch 2,
**dadurch gekennzeichnet, dass**
die Wärmerohre (4) auf einer Tragestruktur (14) angeordnet sind, wobei die Tragestruktur (12) in einer solchen Weise konfiguriert ist, dass die Wärmerohre (4) bezüglich der Umgebung in einem Winkel zwischen 1° und 89° ausgerichtet sind, wobei die Wärmerohre (4) mit einer gemeinsamen Wasserquelle (16) und mit einem gemeinsamen Wasserauslass verbunden sind.

4. Heizvorrichtung gemäß Anspruch 3,
**dadurch gekennzeichnet, dass**
eine Oberfläche (18), die an die Wärmerohre (4) anliegt, mindestens teilweise verdunkelt ist, insbesondere schwarz eingefärbt ist, um die Reflexion von Sonnenlicht zu verringern, wobei die Oberfläche vorzugsweise mit einer dunkelfarbigen Beschichtung beschichtet ist.

5. Heizvorrichtung gemäß Anspruch 3 oder Anspruch 4,
**dadurch gekennzeichnet, dass**
die Tragestruktur (14) und mindestens ein Teil der Wärmerohre (4) mit einer Schicht eines Materials (20) abgedeckt sind, das mindestens für ein definiertes Spektrum sichtbaren Lichts durchlässig ist, wobei ein Zwischenraum (22) zwischen der Schicht (20) und der Tragestruktur (14) luftleer gemacht ist.

6. Heizvorrichtung gemäß einem der vorhergehenden Ansprüche,
**dadurch gekennzeichnet, dass**
die Leitermittel (8) einen Kreislauf bilden, der den Verdampfungsabschnitt (10) mit dem Kondensierungsabschnitt (12) verbindet,
wobei ein Komprimierungsmittel zum Komprimieren des verdampften Fluids zwischen dem Verdampfungsabschnitt (24) und dem Kondensierungsabschnitt (12) angeordnet ist.

7. Heizvorrichtung gemäß Anspruch 3,
**dadurch gekennzeichnet, dass**
die Wasserquelle (16) ein Tank ist.

8. Heizvorrichtung gemäß einem der vorhergehenden Ansprüche,
**dadurch gekennzeichnet, dass**
das Einstellmittel zum schrittweise oder stufenlosen Einstellen der Fluidströmung innerhalb des Kondensierungsabschnitts (12) vorgesehen ist.

9. Heizvorrichtung gemäß Anspruch 8,
**dadurch gekennzeichnet, dass**
ein Sensormittel vorgesehen ist zum Erfassen von Schwingungen des Kondensierungsabschnitts (12), wobei das Sensormittel zum Erzeugen eines Fluidstroms, der vorbestimmte Schwingungen des Kondensierungsabschnitts (12) verursacht, mit dem Einstellmittel gekoppelt ist.

10. Verfahren zum Erwärmen von Wasser,
**dadurch gekennzeichnet, dass** es die folgenden Schritte aufweist:
Vorsehen einer Heizvorrichtung (1),
wobei die Heizvorrichtung mindestens aufweist:
eine Wärmerohreinheit (2),
wobei die Wärmerohreinheit (2) mindestens ein Wärmerohr (4) zum Erwärmen von Wasser aufweist, und
eine Wärmepumpeneinheit (6) zum Erwärmen des Wassers innerhalb des Wärmerohrs (4),
wobei die Wärmepumpeneinheit (6) aufweist:
ein Fluidleitungsmittel (8) zum Leiten eines Energieübertragungsfluids,
wobei das Fluidleitungsmittel (8) einen Verdampfungsabschnitt (10) zum Verdampfen des Energieübertragungsfluids aufweist,
und
wobei das Fluidleitungsmittel (8) einen Kondensierungsabschnitt (12) zum Kondensieren des verdampften Übertragungsfluids aufweist,
wobei der Kondensierungsabschnitt (12) mindestens thermisch mit dem mindestens einen Wärmerohr (4) der Wärmerohreinheit (2) gekoppelt ist,
wobei der Kondensierungsabschnitt mechanisch mit den unteren 75% (der Länge) eines oder mehrerer Wärmerohre gekoppelt ist, um von der Wärmepumpeneinheit verursachte Schwingungen auf mindestens ein Wärmerohr zu übertragen, um Wasser innerhalb des Wärmerohrs zu zerstäuben,
Bestimmen der maximalen Abgabe oder des maximalen Durchsatzes auf eine vorbestimmte Temperatur erwärmten Wassers der Wärmerohreinheit (2),
Bestimmen, ob die maximale Abgabe oder der maximale Durchsatz oberhalb oder unterhalb der tatsächlichen Nachfrage ist, wobei für den Fall, dass die bestimmte maximale Abgabe oder der bestimmte maximale Durchsatz kleiner als die tatsächliche Nachfrage ist, die Wärmepumpeneinheit (6) aktiviert wird.

## Revendications

1. Dispositif de chauffage (1),
comprenant au moins
une unité de tuyau calorifique (2),
dans lequel l'unité de tuyau calorifique (2) comprend au moins un tuyau calorifique (4) pour le chauffage d'eau,
et
une unité de pompe à chaleur (6) pour le chauffage de l'eau dans le tuyau calorifique (4),
dans lequel l'unité de pompe à chaleur (6) comprend
un moyen de conduite de fluide (8) pour la conduite d'un fluide de transfert d'énergie,
dans lequel le moyen de conduite de fluide (8) comprend une section d'évaporation (10) pour l'évaporation du fluide de transfert d'énergie, et
dans lequel le moyen de conduite de fluide (8) comprend une section de condensation (12) pour la condensation du fluide de transfert évaporé,
dans lequel la section de condensation (12) est au moins thermiquement couplée à l'au moins un tuyau calorifique (4) de l'unité de tuyau calorifique (2),
**caractérisé en ce que**
la section de condensation (12) est mécaniquement couplée à la longueur inférieure à 75 % d'un ou plusieurs tuyaux calorifiques (4) pour le transfert de vibrations causées par l'unité de pompe à chaleur (6) à au moins un tuyau calorifique (4) pour pulvériser de l'eau dans le tuyau calorifique (4).

2. Dispositif de chauffage selon la revendication 1,
**caractérisé en ce que**
l'unité de tuyau calorifique (2) comprend de multiples tuyaux calorifiques (4) et la section de condensation (12) s'étend le long d'une pluralité de ces tuyaux calorifiques (4), dans lequel la section de condensation (12) présente une forme en méandre dans la région de l'unité de tuyau calorifique (2).

3. Dispositif de chauffage selon la revendication 2,
**caractérisé en ce que**
les tuyaux calorifiques (4) sont agencés sur une structure de support (14), dans lequel la structure de support (12) est configurée de telle manière que les tuyaux calorifiques (4) soient alignés par rapport à l'environnement dans un angle entre 1° et 89°, dans lequel les tuyaux calorifiques (4) sont raccordés à une source d'eau (16) commune et à une sortie d'eau commune.

4. Dispositif de chauffage selon la revendication 3,
**caractérisé en ce que**
une surface (18) adjacente aux tuyaux calorifiques (4) est au moins partiellement assombrie, en particulier colorée en noir, pour la réduction de la réflexion de la lumière du soleil, dans lequel la surface est de préférence revêtue avec un revêtement coloré en noir.

5. Dispositif de chauffage selon la revendication 3 ou la revendication 4,
**caractérisé en ce que**
la structure de support (14) et au moins certains des tuyaux calorifiques (4) sont couverts avec une couche de matériau (20) au moins transparente pour un spectre défini de lumière visible, dans lequel un espace intermédiaire (22) entre la couche (20) et la structure de support (14) est évacué.

6. Dispositif de chauffage selon l'une quelconque des revendications précédentes,
**caractérisé en ce que**
le moyen de conduite (8) forme un circulateur raccordant la section de vaporisation (10) à la section de condensation (12),
dans lequel un moyen de compression pour la compression du fluide vaporisé est agencé entre la section de vaporisation (24) et la section de condensation (12).

7. Dispositif de chauffage selon la revendication 3,
**caractérisé en ce que**
la source d'eau (16) est un réservoir.

8. Dispositif de chauffage selon l'une quelconque des revendications précédentes,
**caractérisé en ce que**
un moyen d'ajustement pour l'ajustement progressif ou continu du flux de fluide dans la section de condensation (12) est prévu.

9. Dispositif de chauffage selon la revendication 8,
**caractérisé en ce que**
un moyen de capteur est prévu pour la détection de vibrations de la section de condensation (12), dans lequel le moyen de capteur est couplé au moyen d'ajustement pour la mise en place d'un flux de fluide provoquant des vibrations prédéfinies de la section de condensation (12).

10. Procédé de chauffage d'eau,
**caractérisé en ce qu'**il comprend les étapes suivantes : fourniture d'un dispositif de chauffage (1),
dans lequel le dispositif de chauffage comprend au moins
une unité de tuyau calorifique (2),
dans lequel l'unité de tuyau calorifique (2) comprend au moins un tuyau calorifique (4) pour chauffer de l'eau,
et
une unité de pompe à chaleur (6) pour chauffer l'eau dans le tuyau calorifique (4),
dans lequel l'unité de pompe à chaleur (6) comprend
un moyen de conduite de fluide (8) pour la conduite d'un fluide de transfert d'énergie,
dans lequel le moyen de conduite de fluide (8) comprend une section d'évaporation (10) pour l'évaporation du fluide de transfert d'énergie,
et
dans lequel le moyen de conduite de fluide (8) comprend une section de condensation (12) pour la condensation du fluide de transfert évaporé,
dans lequel la section de condensation (12) est au moins thermiquement couplée à l'au moins un tuyau calorifique (4) de l'unité de tuyau calorifique (2), dans lequel la section de condensation est mécaniquement couplée à la (longueur) inférieure à 75 % d'un ou plusieurs tuyaux calorifiques pour le transfert de vibrations provoquées par l'unité de pompe de tête à au moins un tuyau calorifique pour pulvériser de l'eau dans le tuyau calorifique,
détermination de la sortie ou du débit maximum d'eau chauffée à une température prédéfinie de l'unité de tuyau calorifique (2),
fait de déterminer si la sortie ou le débit maximum est au-dessus ou sous la demande réelle, au cas où la sortie ou le débit maximum déterminé est inférieur à la demande réelle l'unité de pompe à chaleur (6) est activée.
